# DEMANDE DE BREVET EUROPEEN

(11) **EP 2 960 572 A1**
(43) Date de publication de la demande: **30.12.2015**
(21) Numéro de dépôt: 15172775.7
(22) Date de dépôt: 16.12.2003
(51) Int. Cl.: F21S 8/10, B60Q 1/00

(54) **DISPOSITIF D'ÉCLAIRAGE ET/OU DE SIGNALISATION DU TYPE PROJECTEUR OU FEU POUR VÉHICULE AUTOMOBILE**

(30) Priorité: 20.12.2002 FR 0216429
(62) Demande divisionnaire de: 03293164.4
(71) Demandeur: VALEO VISION, 93012 Bobigny Cedex (FR)
(72) Inventeur: GASQUET, Jean-Claude, 89100 SAINT CLEMENT (FR)

(57) **Abrégé**

L'invention a pour objet un dispositif d'éclairage et/ou de signalisation pour véhicule automobile, ledit dispositif comportant un boîtier (1) à l'intérieur duquel sont disposés au moins une source de lumière principale (2,3), au moins un réflecteur (4) associé à la ou aux source(s) de lumière principale(s), optionnellement au moins un écran intermédiaire (6) substantiellement transparent et faisant face à ladite ou au moins à l'une desdites source(s) de lumière principale(s), et une glace de fermeture du boîtier (5). Au moins une des faces de la glace de fermeture (5) et/ou de l'écran intermédiaire optionnel (6) est munie d'une pluralité de foyers de diffusion (10) de la lumière par altérations superficielles de ladite face.

## Description

La présente invention concerne le domaine des dispositifs d'éclairage et de signalisation pour véhicules automobiles. Elle concerne plus particulièrement l'aspect des feux de signalisation, mais s'applique mutadis mutandi aux dispositifs d'éclairage. Dans le domaine de la signalisation, tout comme dans celui de l'éclairage, de nombreuses contraintes réglementaires laissent peu de place pour modifier l'aspect des feux à l'état allumé, puisque la photométrie des faisceaux lumineux est imposée dans une très large mesure. Cependant, le style est une donnée très importante pour ce type de produit, et les équipementiers automobile cherchent à donner une "signature" à leurs produits, pour qu'ils soient aisément identifiables par l'utilisateur final. Or, si cette "signature" est claire de jour, quand le feu ou le projecteur est éteint, il n'en est pas de même la nuit, quand ils sont allumés. En effet, de nuit, ils ne sont généralement pas visibles sur toute leur surface extérieure: seules les plages éclairantes des fonctions optiques de base sont éclairées. Ainsi, un feu de signalisation est composé de plusieurs plages éclairantes correspondant aux différentes fonctions optiques à réaliser, dont des fonctions allumées en continu comme la fonction lanterne, et des fonctions allumées que par périodes. De nuit, l'apparence du feu correspond à une juxtaposition de zones éclairantes, plus ou moins éclairées et donnant une impression visuelle d'inhomogénéité.

Le dispositif d'éclairage ou de signalisation a donc en fait deux aspects bien différents selon qu'il est allumé ou éteint. La tendance actuelle à augmenter la surface des projecteurs et des feux ne fait qu'accentuer encore cette différence. C'est tout particulièrement le cas de feux à grande surface extérieure du type feux avec "retour d'aile", c'est-à-dire des feux qui s'étendent non seulement sur la face avant ou arrière du véhicule, mais aussi sur le flanc de celui-ci au niveau de la partie de raccordement d'une aile à cette face avant ou arrière : on a dans ce cas précis souvent une forte disparité entre la surface allumée utile et la surface extérieure complète du feu.

On a donc tendance à perdre, de nuit, la "signature" du feu ou du projecteur. Par ailleurs et de façon plus générale, il existe un besoin pour mieux diversifier/ajuster l'aspect des projecteurs ou des feux quand au moins une de leur fonction optique est allumée.

L'invention a alors pour but d'améliorer l'aspect des dispositifs d'éclairage et/ou de signalisation, tout particulièrement quand ils sont au moins partiellement allumés. Subsidiairement, l'invention a aussi pour but que cette amélioration soit simple à réaliser et simple à mettre en oeuvre. Subsidiairement encore, l'invention a aussi pour but une amélioration qui puisse également offrir des alternatives de réalisation à des fonctions optiques standard comme la fonction de feu de position.

L'invention a tout d'abord pour objet un dispositif d'éclairage et/ou de signalisation pour véhicule automobile, ledit dispositif comportant un boîtier à l'intérieur duquel sont disposés au moins une source de lumière principale, au moins un réflecteur associé à la ou aux source(s) de lumière principale(s), optionnellement au moins un écran intermédiaire substantiellement transparent et faisant face à ladite ou au moins à l'une desdites source(s) de lumière principale(s), et une glace de fermeture du boîtier. Au moins une des faces de la glace de fermeture et/ou de l'écran intermédiaire optionnel est en outre munie d'une pluralité de foyers de diffusion de la lumière par altérations superficielles de ladite face.

Dans toute la suite du texte, on désignera par "feu" le dispositif de signalisation selon l'invention, et ce terme est à comprendre comme pouvant s'appliquer similairement aux projecteurs, par soucis de concision.

On comprend par "altération superficielle" au sens de l'invention une modification qui n'est pas un apport de matière, un revêtement par exemple, mais une modification locale du "relief "de la face en question, qui peut être un bossage, ou de préférence, une modification "en creux". Il peut s'agir véritablement de creux tridimensionnels, dont la profondeur s'exprime, par exemple, en dixièmes de millimètre, ou des « pseudo-motifs » qui sont plus des motifs surfaciques que volumiques, de très faible profondeur, et dont la profondeur s'exprime plutôt en microns ou dizaines de microns.

On comprend au sens de l'invention par foyer "diffusant" un foyer qui est au moins partiellement, notamment principalement diffusant, et même essentiellement diffusant, sans exclure qu'une partie, minoritaire ou non, des rayons qui le frappe soit réfléchie et/ou absorbée par ledit foyer.

Ces altérations vont avoir pour fonction première de diffuser les rayons lumineux qui sont susceptibles de se propager dans l'épaisseur de la glace ou de l'écran, émis notamment par une ou plusieurs sources de lumière secondaires de configuration appropriée qui seront décrites ultérieurement: la glace ou l'écran jouent alors le rôle de guide optique, les rayons lumineux entrant par leurs chants dans leur épaisseur et s'y propageant par une succession de réflexions totales. Quand une partie au moins de ces rayons lumineux frappent les foyers de diffusion selon l'invention, les rayons en question diffusent, au moins en partie, selon de multiples directions. Pour l'observateur, tout va alors se passer comme si ces foyers de diffusion étaient eux même des sources lumineuses. Et ceux ci sont de préférence conçus de façon à ce qu'ils n'affectent pas substantiellement les fonctions optiques principales assurées par les sources de lumière principale (notamment leur couleur, la forme ou l'intensité des faisceaux). En fonction notamment de la forme, de la taille, de la répartition des foyers de diffusion, en fonction aussi de la puissance/de la photométrie des rayons lumineux se propageant dans l'épaisseur de la glace ou de l'écran, on peut alors créer des aspects extérieurs très originaux et variés, que les fonctions optiques principales du feu ou du projecteur soient allumées ou éteintes. Ainsi, il est possible de faire en sorte que les diffusions locales de lumière interagissent, pour donner une impression que la totalité de l'écran ou de la glace est éclairée. L'observateur extérieur a alors l'impression que toute la surface extérieure du feu est éclairée, notamment quand seulement une des fonctions optiques principale du feu est allumée. On retrouve ainsi la "signature "du feu à l'état allumé qu'il avait à l'état éteint. C'est tout particulièrement avantageux pour les feux "à retour d'aile" évoqués plus haut, où l'on peut, grâce à l'invention, éclairer la surface du retour d'aile, alors qu'usuellement les volumes alloués dans ces zones sont très restreints et que, par conséquent, il est difficile d'y insérer des sources lumineuses usuelles.

Mais l'invention permet bien d'autres applications. On peut ainsi adapter la configuration des foyers de diffusion, de façon à ce qu'ils créent des zones éclairées continues et localisées sur l'écran ou la glace: il peut s'agir, par exemple, de "surligner" les fonctions optiques principales avec des foyers de diffusion localisés sur la glace ou l'écran autour de la zone en regard de la source lumineuse principale. On peut aussi souhaiter que tout ou partie des foyers de diffusion apparaissent comme des sources de lumières localisées sans interaction les unes avec les autres. Une variante consiste aussi à "souligner "avec des foyers de diffusion placés à la périphérie de la glace ou de l'écran, les contours de la surface extérieure du feu. Une autre variante consiste à utiliser ces foyers de diffusion pour assurer une fonction optique principale, comme un feu de positionnement, en choisissant les sources de lumière secondaires appropriées : l'invention permet alors de supprimer éventuellement une source de lumière principale standard.

Selon une variante de l'invention, au moins une des faces de la glace de fermeture et/ou de l'écran intermédiaire optionnel est munie d'un ou plusieurs de foyers de réflexion de la lumière par altération(s) superficielle(s) de ladite face. Les altérations sont à comprendre dans le même sens que précédemment, mais dans ce cas-ci elles sont configurées de façon à réfléchir, au moins en partie, les faisceaux lumineux qui se propagent dans l'épaisseur de l'écran ou de la glace.

Ainsi dans un mode de réalisation consistant en des "creux" à la surface de l'écran ou de la glace, les parois peuvent être polies au moins partiellement.

On comprend par foyer "de réflexion" un foyer qui réfléchit la majorité, notamment l'essentiel, des rayons lumineux qui le frappent, mais il peut également, de façon minoritaire ou non, être aussi diffusant et/ou absorbant vis à vis desdits rayons.

L'avantage de munir l'écran ou la glace de ce type de foyers réfléchissants est que l'on peut concentrer/renvoyer de la lumière à partir de ce ou ces foyers, de façon contrôlée dans une direction donnée, vers l'extérieur du feu. Un feu de stop peut notamment être obtenu à partir d'un ou plusieurs foyers de réflexion de configuration et de localisation appropriées : ce ou ces foyers associé aux sources de lumière secondaires ad hoc peuvent donc remplacer une source de lumière standard pour une fonction optique principale du type feu stop/clignotant.

Avantageusement, les altérations superficielles (des foyers diffusants et/ou des foyers de réflexion) de la face de la glace de fermeture ou de l'écran intermédiaire sont en forme de creux par rapport à la surface substantiellement lisse par ailleurs de ladite face. Cette configuration est en effet préférable à une configuration de type bossage, car les rayons lumineux rasants parcourant la glace ou l'écran sont interceptés par des motifs en creux alors qu'ils ne le seraient pas par des bossages : le rendement serait moins bon.

Avantageusement, les creux ont une surface apparente comprise entre 0,05 et 5 mm², notamment comprise entre 0,1 et 1 mm². On comprend par "surface apparente" la surface qui est délimitée par les bords de la cavité, mesurée dans le plan de la face de l'écran ou de la glace ainsi modifiée. Avantageusement encore, lesdits creux ont une profondeur maximale comprise entre 0,05 et 2 mm, notamment entre 0,1 et 1 mm. Quand il s'agit d'avantage des « pseudo-motifs », plus de type surfacique que volumique, leu profondeur peut être très faible, de une à quelques dizaines de microns.

Avantageusement encore, lesdits creux ont des parois au moins partiellement diffusantes. De préférence, ces motifs ou creux ne sont pas contigus les uns par rapport aux autres et/ou sont disposés sur une seule des faces de l'écran ou de la glace.

Ces dimensions/caractéristiques sont préférées, notamment car elles permettent de limiter/éviter toute interférence optique entre ces foyers et la photométrie/la distribution des faisceaux lumineux émis par la ou les sources lumineuses principales : ces faisceaux traversent la glace ou l'écran sans être affectés notablement par ces altérations superficielles. En plus, la glace ou l'écran étant de préférence en matière plastique et transparents, ces foyers de diffusion, sont, avec de telles dimensions, invisibles, ou quasiment invisibles à l'oeil nu quand on regarde le feu.

Avantageusement, les foyers de diffusion sont sur la face interne de la glace de fermeture (ce qui évite de les exposer aux intempéries, à des risques d'encrassement) ou sur l'une des faces au moins de l'écran intermédiaire quand il est présent.

Avantageusement, le feu comprend un écran intermédiaire, celui traité selon l'invention, dont la forme géométrique épouse au moins partiellement celle de la glace de fermeture. Ainsi, si toute la surface de l'écran est traitée selon l'invention, on pourra avoir l'effet de feu entièrement éclairé sur sa surface extérieure, comme si c'était la glace qui était traitée.

Comme déjà évoqué, la répartition des foyers de diffusion sur la face de la glace de fermeture ou de l'écran intermédiaire peut être aléatoire, régulière, ou suivre un ou plusieurs motifs.

Elle peut aussi être centrée sur une zone correspondant à une fonction primaire d'éclairage ou de signalisation assurée par une source de lumière principale.

Pour que les foyers diffusants (et réfléchissants s'il y en a) puissent apparaître comme des sources de lumière, ils sont associés à une ou plusieurs sources de lumière secondaires apte(s) à émettre de la lumière se propageant dans l'épaisseur de la glace ou de l'écran. Elles sont de préférence choisies parmi les diodes électroluminescentes, les extrémités de fibres optiques, des micro-lampes à filament, ou un ou plusieurs néons. On privilégie les diodes électroluminescentes, qui présentent l'avantage d'être de faibles dimensions : elles s'adaptent bien à la faible épaisseur des glaces ou des écrans (1 à 8, notamment 2 à 5 mm en général). De préférence, le pourtour de la glace de fermeture ou de l'écran dont la face est traitée selon l'invention est partagé en au moins une zone « active » en regard d'au moins une source de lumière secondaire, et en au moins une zone « passive » sans source de lumière secondaire.

Selon une première variante, la ou les zones « actives » comprennent une pluralité d'évidements espacés les uns des autres et susceptibles de loger chacun au moins en partie la tête de la source de lumière secondaire de type diode électroluminescente. Avec des évidements de type semi sphérique et des têtes de diodes de forme complémentaire, on peut piéger au mieux dans l'épaisseur de la glace ou de l'écran le flux lumineux émis par la diode sur 180° (les diodes sont généralement fixées sur un support plan).

Selon une seconde variante, on utilise plutôt un évidement continu susceptible de loger au moins en partie la tête de sources de lumières secondaires de type diodes électroluminescentes, notamment une pluralité de diodes alignées. On peut choisir un évidemment de type semi cylindrique, avec un alignement de diodes, pour un même objectif : piéger/capter au mieux dans l'épaisseur du matériau la lumière émise par les diodes.

Toujours pour cet objectif, le pourtour de la glace ou de l'écran au niveau des zones « actives » peut présenter une section modifiée afin d'optimiser la récupération de la lumière émise par la ou le sources de lumière secondaires, notamment une section présentant un renflement de préférence autour du ou des évidements logeant au moins en partie lesdites sources de lumière secondaires. Le matériau de la glace ou de l'écran récupère ainsi le flux sur une ouverture angulaire plus importante.

De préférence, le pourtour de la glace ou de l'écran au niveau des zones « actives » présente une section modifiée de façon à permettre la fixation directe ou indirecte de la ou des sources de lumière secondaires du type diode. Il peut s'agir d'une excroissance servant d'embase de fixation à un ou plusieurs éléments support de diodes électroluminescentes. De préférence, la fixation des éléments support de diodes électroluminescentes est réalisée par clippage ou par collage. On peut ainsi plaquer la face du support de diodes munie des diodes contre l'embase de l'écran ou de la glace, de façon à ce que les diodes se trouvent logées dans le ou les évidements situés sur le pourtour de la glace ou de l'écran.

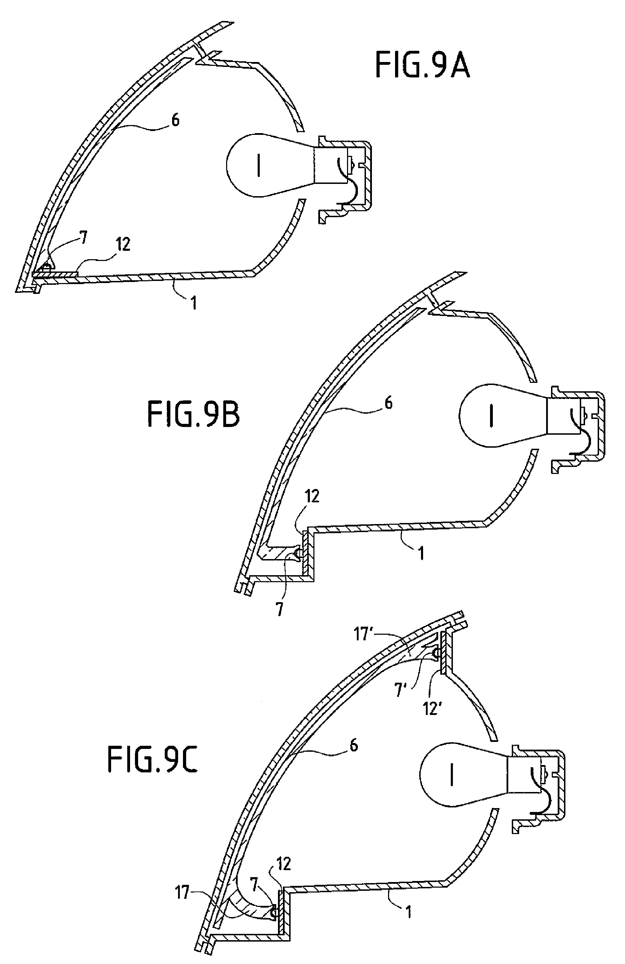

Une autre variante consiste à éloigner les diodes du chant de la glace, et à utiliser des moyens pour canaliser la lumière émise par les diodes jusqu'au pourtour de la glace ou de l'écran. On peut ainsi positionner la carte électronique, supportant les leds et leur alimentation, sur une face appartenant au boîtier à l'arrière du feu (ou du projecteur). Des exemples selon cette variantes sont illustrés aux figures 9a,9b,9c. La lumière émise par les diodes est récupérée par un système optique adéquat issu de l'écran à illuminer. La fabrication du produit final en est facilitée.

Au niveau de la ou des zones « passives » du pourtour de la glace ou de l'écran, le chant de la glace ou de l'écran peut, selon une première variante, être traité pour réfléchir dans l'épaisseur du matériau les faisceaux lumineux qui l'atteignent. Ce traitement peut notamment consister en une métallisation du chant, qui peut garder sa forme géométrique la plus simple habituelle, à savoir être plan et substantiellement perpendiculaire aux faces de l'écran ou de la glace. Ce traitement peut aussi consister à modifier la forme du chant, notamment par un double biseautage. Dans les deux cas, on augmente ainsi le rendement des sources de lumière secondaires du type diode.

Selon une seconde variante, le chant de la glace ou de l'écran au niveau de ces zones « passives » peut être traité pour réfléchir vers l'extérieur du dispositif (par la glace de fermeture) les faisceaux qui l'atteignent, notamment en modifiant la forme du chant. On peut ainsi faire un chant présentant un simple biseautage. Dans ce cas de figure, vu de l'extérieur, on a l'impression que le bord ainsi traité de la glace ou de l'écran joue le rôle d'une source de lumière, par réflexion totale de la lumière.

Le biseautage, simple ou double, du chant peut être obtenu lors du moulage même de la glace ou de l'écran.

La ou les sources de lumières secondaires de type diodes électroluminescentes, relayées par les foyers de diffusion et éventuellement le ou les foyers de réflexion de la lumière, peuvent remplir la fonction de feu de position avant et/ou arrière, ou de rappel latéral, et se substituer ainsi à une source de lumière principale conventionnelle.

L'invention a aussi pour objet le procédé d'obtention du dispositif décrit plus haut, et notamment le procédé d'obtention de l'écran et/ou de la glace modifiés avec des foyers de diffusion de la lumière superficiels (et éventuellement les foyers de réflexion de la lumière). Selon une première variante, ces foyers sont obtenus directement lors du moulage de la glace de fermeture ou de l'écran intermédiaire. C'est la variante préférée, puisqu'elle n'ajoute aucune opération particulière à la fabrication de la glace ou de l'écran. Le moule est à adapter en fonction de la forme des motifs voulus, il s'agit notamment d'un moule aux parois munies de micro aspérités, de picots. Selon une seconde variante, on fabrique par moulage de façon conventionnelle la glace ou l'écran, et on fait subir à l'une de leurs faces au moins un post-traitement, par exemple un traitement d'abrasion mécanique, un traitement au laser. Ce post traitement peut aussi consister en un traitement de surface sous vide avec des masques. On peut aussi associer à l'écran ou à la glace une feuille à base de matériau plastique, par exemple en polycarbonate ou en PMMA, et aux reliefs requis, l'association pouvant se faire par calandrage et thermoformage.

L'invention a aussi pour objet le véhicule automobile équipés de dispositifs d'éclairage/de signalisation décrits plus haut.

L'invention sera détaillée ci-après avec des exemples non limitatifs, à l'aide des figures suivantes :
- fig.1: feu de signalisation/éclairage en coupe
- fig. 2a, 2b, 2c: écran de feu, vu sous différents angles
- fig. 3: un pourtour « actif » d'écran représentant une tête de diode électroluminescente
- fig. 4 : une vue plus étendue du pourtour selon la figure 3
- fig.5a à 5f : des vues du mode de fixation du support de diodes à l'embase de l'écran
- fig.6a à 6d : différents modes de répartition des foyers de diffusion à la surface de l'écran
- fig.7a à 7c : différents modes de traitement du chant de l'écran au niveau des zones « passives «
- fig.8 : une vue en coupe de l'écran au niveau d'un foyer de réflexion de la lumière
- fig.9a à 9c : des vues de différents modes de fixation du support de diodes sur le boîtier et l'entrée de lumière dans l'écran d'un feu.

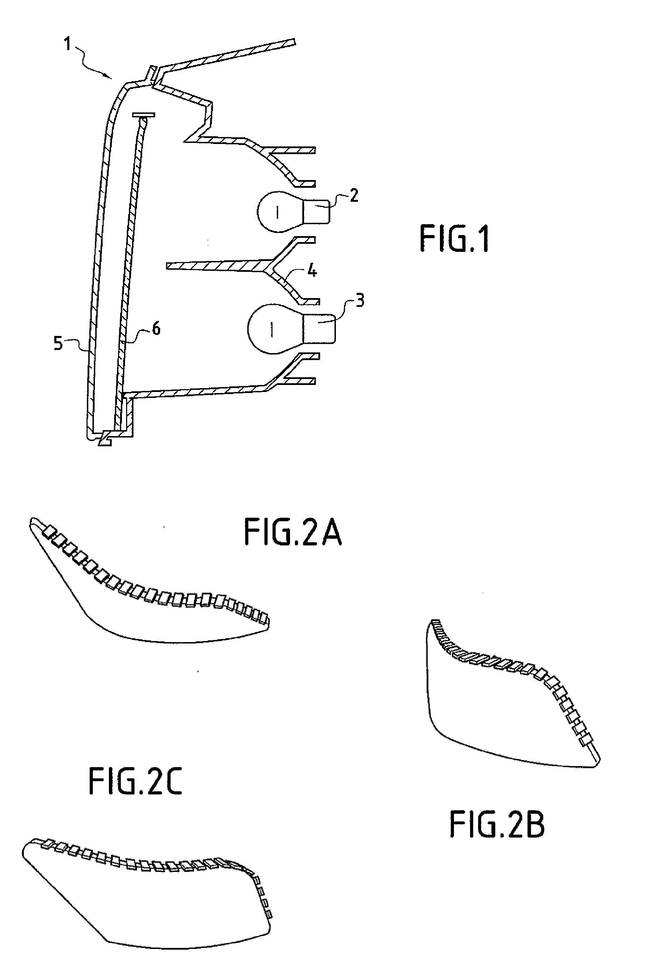

Un feu de signalisation/éclairage est usuellement composé au moins des éléments suivants, comme cela est représenté à la figure 1 :
- un boîtier 1,
- une ou plusieurs sources de lumière principales 2,3, comme une lampe halogène une lampe au xénon ou une diode électroluminescente (ci après désignée par le terme « diode ») dite de puissance,
- un réflecteur 4, par exemple en matière plastique métallisée
- une glace de fermeture 5
- un écran optionnel 6 intérieur, qui répartit spatialement la lumière selon la fonction optique à réaliser (lanterne, feu stop ou brouillard par exemple)

Cet ensemble doit satisfaire aux normes mais participe aussi fortement au style du véhicule.

Dans l'exemple de réalisation de l'invention, il y a un écran 6, que l'on voit sous différents angles aux figures 2a à 2c. Cet écran est en matière plastique transparente, en PMMA (poly méthacrylate de méthyle), d'une épaisseur comprise entre 2 et 5 mm, notamment afin de faciliter sa fabrication par moulage par injection. Sa couleur peut être cristal (incolore), rose ou fumée pour rester compatible avec les fonctions recul et/ou indicateur de direction. Sur une partie de son pourtour, sont disposées de petites diodes électroluminescentes 7, qui envoient de la lumière dans l'épaisseur de l'écran 6, où elle se trouve piégée grâce à la réflexion totale interne entre les deux faces de l'écran constituant un guide de lumière. On pouvait déjà connaître des guides de lumière par réflexion totale présentant une symétrie de révolution, mais ici l'invention utilise un écran comme guide, avec deux faces parallèles entre elles, ce qui est très innovant. Les diodes 7 ne sont présentes dans cet exemple que sur une partie seulement du pourtour de l'écran, sur sa zone « active » 8 comme expliqué plus haut. Le reste du pourtour est la zone « passive» 9.

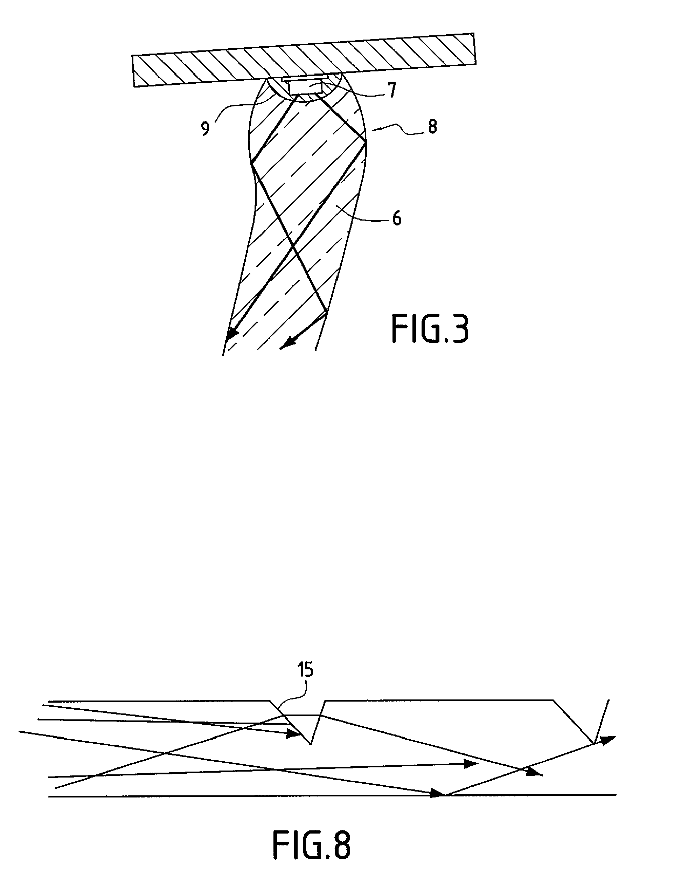

Au niveau du pourtour « actif » 8, on réalise des modifications de forme de l'écran pour exploiter au maximum le flux lumineux émis par les diodes 7, comme montré à la figure 3 : on y voit la zone active 8 de l'écran 6 qui présente un évidemment, une cavité 9 en périphérie. Cette cavité a approximativement la forme d'une portion de sphère, et accueille une tête de diode 7. On comprend que le pourtour de l'écran est muni d'une pluralité de ces cavités 9, chacune étant destinée à loger une diode 7. Bien sûr, il est aussi possible de ne prévoir qu'une cavité continue, par exemple ayant la forme d'une portion de cylindre pour accueillir plusieurs diodes alignées. Les dimensions/formes respectives des cavités et des têtes de diode sont de préférence complémentaires, avec suffisamment de jeu pour que les diodes puissent être facilement logées dans les cavités. Par ailleurs, on prévoit un renflement de l'écran sur ce pourtour actif, venant entourer les cavités 9. La combinaison des cavités 9 et du renflement (un renflement par cavité quant il y a plusieurs cavités, un renflement continu quand il n'y a qu'une seule cavité logeant plusieurs diodes) permet de récupérer toute ou quasiment toute l'énergie lumineuse des diodes sur un cône émissif qui peut atteindre 180°.

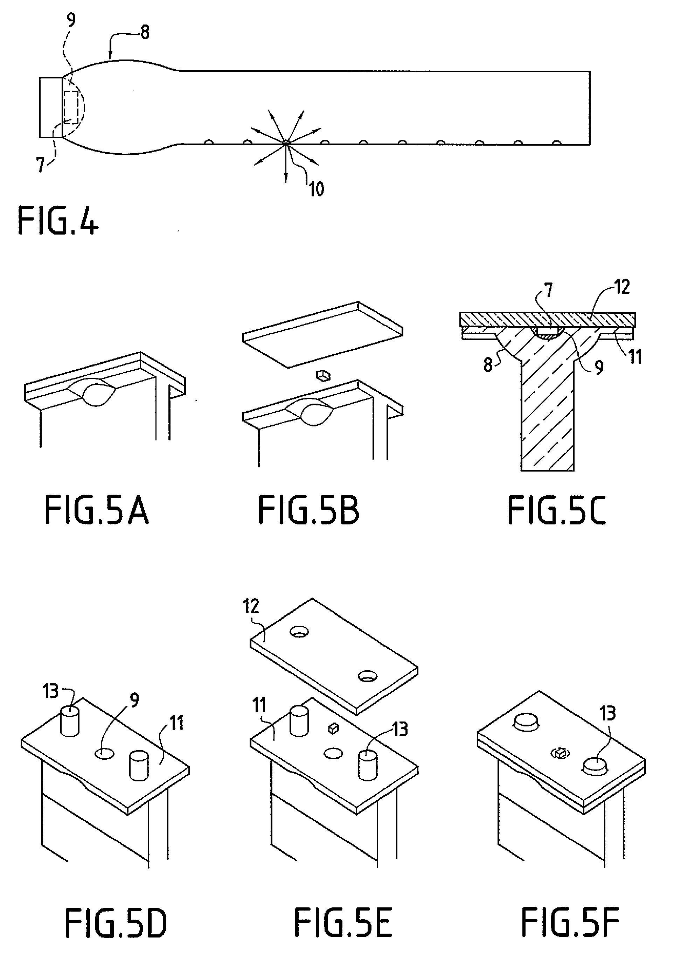

Les figures 5a-5f montrent une troisième modification de la section de l'écran 6 au niveau des zones « actives » : la figure 5a représente vu d'en bas la cavité 9, le renflement, mais aussi une embase 11, qui est une zone plane approximativement perpendiculaire au plan de l'écran. Cette zone plane 11 va permettre de fixer la plaque support 12 des diodes 7. On voit à la figure 5c que la largeur de l'embase 11 coïncide avec celle de la plaque support 12. Quand on vient placer la plaque support 12 sur l'embase 11, les diodes 7 se trouvent placées dans les cavités 9. Pour fixer la plaque 12 à l'embase, différentes solutions mécaniques sont possibles, dont le collage, le vissage ou encore le clippage. Les figures 5d-5f montrent une troisième solution : le boutrollage : Les bouterolles 13 se trouvent sur l'embase (là encore, moulées avec l'écran) en figure 5d, elles sont écrasées en figure 5f afin de riveter les deux pièces l'une à l'autre, et de bloquer en position les diodes 7.

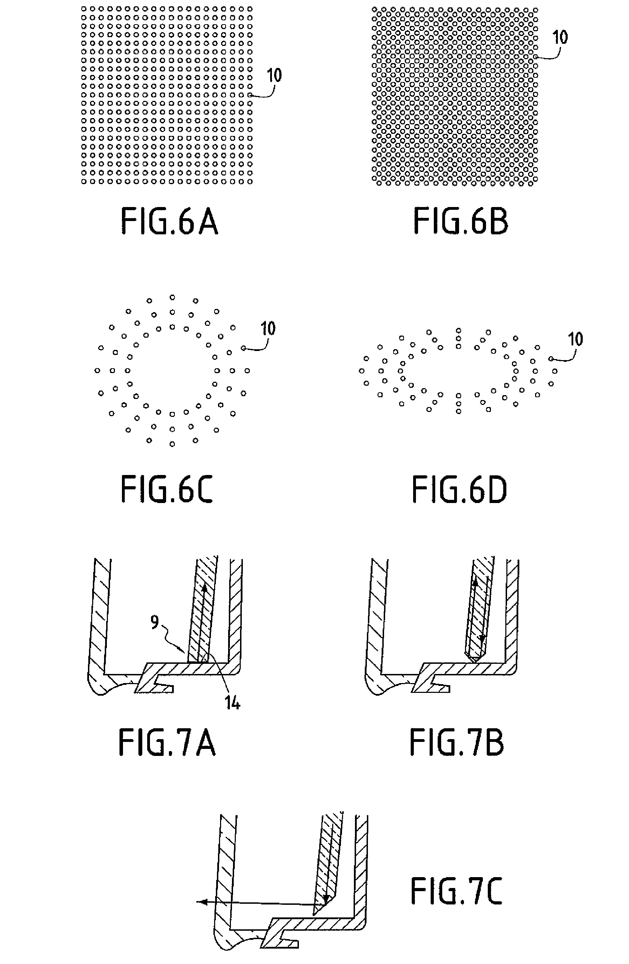

La figure 3 symbolise deux trajets de deux rayons émis par une des diodes 7 : on voit qu'ils cheminent dans l'épaisseur de l'écran 6 par réflexions successives sur les faces de l'écran. Comme détaillé à la figure 4, ces réflexions successives sont interrompues quand les rayons rencontrent des foyers de diffusion 10 crées selon l'invention à la surface de l'une des faces de l'écran ces rayons qui se trouvent au voisinage de la face ainsi modifiée (les rayons rasants) vont diffuser dans toutes les directions (symbolisés par les flèches). Ces foyers 10 sont des motifs creux diffusants qui se trouvent sur la surface polie optique de l'écran 6. Chaque foyer 10 se comporte alors comme une source optique secondaire. On peut ensuite avoir toutes sortes de répartition de ces « creux » diffusants en fonction de l'effet recherché : les figures 6a à 6d donnent ainsi des exemples de répartition, ces représentations n'étant pas à l'échelle pour être plus claires. Les dimensions de ces creux sont de surface apparente de 0.1 à 1 ou 2 mm, ils ont des profondeurs variables de quelques centièmes de millimètres à un millimètre, leur forme peut être évolutive, notamment de ronde à rectangulaire, leur état de surface est diffusant via des micromotifs structurés pour optimiser la diffusion spatiale isotrope, quelle que soit la position de l'observateur suivant le véhicule. Si l'on veut, au contraire, créer des foyers réfléchissants, leur état de surface sera plutôt poli optique. Leur répartition peut être homogène, régulière ou évolutive selon une direction donnée (figure 6c ou 6d). La « pixélisation », c'est-à-dire le mode de répartition des foyers, peut être organisée selon un tramage prédéfini ou aléatoire. La distance entre deux foyers est variable, par exemple entre 1 mm et 10 à 20mm. La répartition peut permettre de surligner une fonction optique primaire (figure 6a ou 6b). Ces foyers 10 sont obtenus directement lors du moulage de l'écran, en munissant le moule des reliefs appropriés. On peut ainsi obtenir un effet d'écran illuminé sur une partie de sa surface, ou sur toute sa surface : l'observateur verra toute la surface du feu éclairée, on obtient un trompe l'oeil qui donne l'impression d'un feu en trois dimensions mettant en valeur le style du véhicule : on conserve ainsi la signature du feu, qu'il soit allumé ou éteint

Les figures 7a-7c montrent les différentes façons de traiter les pourtours »passifs » de l'écran 6 : la figure 7a montre l'écran 6 dont le chant est recouvert d'un revêtement métallique/réfléchissant 14 (métallisation sous vide du chant) : les rayons « repartent » dans l'épaisseur de l'écran. La figure 7b montre un résultat identique, obtenu par un chant biseauté selon deux côtés (forme qu'on peut obtenir lors du moulage). La figure 7c montre un chant biseauté selon un côté seulement : dans ce cas, le rayon part dans une direction déterminée par la façon dont le chant est biseauté, ici approximativement perpendiculairement à l'écran à travers la glace 5.

La figure 8 montre une variante consistant à munir la face de l'écran déjà munie de foyers de diffusion d'un autre type de foyer: des foyers réfléchissants 15. Ce ou ces motifs peuvent être obtenus comme les foyers diffusants 10.Le trajet des rayons frappant ces foyers 15 (par exemple constitués de motifs similaires aux motifs diffusants, mais aux parois lisses, polies, traitées pour être réfléchissantes) est symbolisé par les flèches : au moins une partie des rayons (selon leur angle d'incidence) va partir hors de l'écran, notamment au travers de la glace 5 : ce ou ces foyers peuvent être disposés dans une zone spécifique pour concentrer spatialement la lumière (au niveau de la fonction stop par exemple).

Les figures 9a, 9b et 9c illustrent trois façons de déporter les diodes 7 du pourtour de l'écran diffusant 6. En figure 9a, la carte électronique 12 supportant les diodes est fixée sur la paroi interne du boîtier 1, dans une zone sensiblement horizontale en position de montage dans le véhicule, à proximité du pourtour de l'écran 6. Ledit pourtour est ensuite modifié, élargi, si nécessaire, de façon à pouvoir canaliser comme précédemment la lumière émise par les diodes 7. La figure 9b représente une autre configuration, où le support des diodes 12 est fixé sur une paroi verticale du boîtier, avec modification du pourtour de l'écran pour capter l'essentiel de la lumière émise par les diodes 7. Cette zone du pourtour peut faire partie intégrante de l'écran, ou être rapportée sur l'écran. La figure 9c montre une configuration similaire à celle de la figure 9b, mais ici le pourtour de l'écran en partie inférieure n'est pas modifié par un simple prolongement, un recourbement de son pourtour inférieur : il s'agit ici de garder le bord inférieur standard de l'écran, et d'ajouter des éléments déviateurs 17. En partie supérieure de l'écran, on utilise également une série de diodes 7' sur leur support 12' fixée sur une paroi verticale du boîtier. Des éléments déviateurs 17' sont également prévus pour récupérer la lumière émise par ces diodes 7'. Les éléments déviateurs 17 ou 17' soit sont soit disposés cote à cote, soit constituent une excroissance continue le long de chacun des bords de l'écran. Les « appendices » que constituent ces éléments 17, 17' ou ces prolongement du pourtour de l'écran collectent donc le flux émis par les diodes et en assure la répartition spatiale dans l'épaisseur de la glace ou de l'écran. Les supports des diodes sont avantageusement solidaires des boitiers des feux ou projecteurs selon l'invention.

L'invention ouvre donc de nouvelles perspectives en termes de style, tout en restant faisable industriellement. On peut ajuster au mieux la nature, la répartition des foyers diffusants au sens de l'invention, ceux ci pouvant en eux même être aussi partiellement réfléchissant (par exemple sous fore de creux "à facettes", avec des parois localement réfléchissantes et localement diffusantes) : on a alors des foyers "hybrides" réfléchissants/diffusants.

A noter aussi que l'on peut combiner dans un même feu ou un même projecteur plusieurs écrans traités selon l'invention, soit en les juxtaposant, soit en les superposant, chaque écran pouvant avoir sa répartition distincte/son type distinct de foyers diffusants et/ou réfléchissants.

L'invention s'applique avantageusement à la signalisation arrière des véhicules ou à la signalisation avant des véhicules, notamment pour réaliser à l'avant la fonction de lampe de ville. Les modifications apportées par l'invention à la glace ou aux écrans intermédiaires n'altèrent pas, naturellement, les fonctions photométriques usuelles attendues de feu ou de projecteur de véhicules automobile. En effet, l'ensemble de l'écran ou de la glace est transparent, poli, seuls les motifs peuvent très légèrement perturber le faisceau lumineux émis par la source de lumière principale.

## Revendications

1. Dispositif d'éclairage et/ou de signalisation pour véhicule automobile, ledit dispositif comportant un boîtier (1) à l'intérieur duquel sont disposés au moins une source de lumière principale (2,3), au moins un réflecteur (4) associé à la ou aux source(s) de lumière principale(s), optionnellement au moins un écran intermédiaire (6) substantiellement transparent et faisant face à ladite ou au moins à l'une desdites source(s) de lumière principale(s), et une glace de fermeture du boîtier (5), **caractérisé en ce que** au moins une des faces de la glace de fermeture et/ou de l'écran intermédiaire optionnel ou de l'un des écrans optionnels au moins est munie d'une pluralité de foyers de diffusion (10) de la lumière par altérations superficielles de ladite face.

2. Dispositif selon la revendication 1, **caractérisé en ce qu'**au moins une des faces de la glace de fermeture (5) et/ou de l'écran intermédiaire optionnel (6) est munie d'un ou plusieurs foyers de réflexion de la lumière par altération superficielle de ladite face.

3. Dispositif selon l'une des revendications précédentes, **caractérisé en ce que** les altérations superficielles de la face de la glace de fermeture ou de l'écran intermédiaire sont en forme de creux par rapport à la surface substantiellement lisse par ailleurs de ladite face.

4. Dispositif selon la revendication 3, **caractérisé en ce que** les creux ont une surface apparente comprise entre 0,05 et 5 mm², notamment comprise entre 0,1 et 1 mm².

5. Dispositif selon la revendication 3 ou la revendication 4, **caractérisé en ce que** les creux ont une profondeur maximale comprise entre 0,001 et 2 mm, notamment entre 0,01 et 1 mm, ou de l'ordre d'une ou plusieurs dizaines de microns..

6. Dispositif selon l'une des revendications 3 à 5, **caractérisé en ce que** les creux ont des parois au moins partiellement diffusantes.

7. Dispositif selon l'une des revendications précédentes **caractérisé en ce que** les foyers de diffusion (10) sont sur la face interne de la glace de fermeture (5) ou sur l'une des faces de l'écran intermédiaire (6).

8. Dispositif selon l'une des revendications précédentes, **caractérisé en ce qu'**il comprend un écran intermédiaire (6) dont la forme géométrique épouse au moins partiellement celle de la glace de fermeture (5).

9. Dispositif selon l'une des revendications précédentes, **caractérisé en ce que** la répartition des foyers de diffusion (10) sur la face de la glace de fermeture ou de l'écran intermédiaire est aléatoire, régulière, ou suit un ou plusieurs motifs.

10. Dispositif selon l'une des revendications précédentes, **caractérisé en ce que** la répartition des foyers de diffusion (10) est centrée sur une zone correspondant à une fonction primaire d'éclairage ou de signalisation assurée par une source de lumière principale (2,3).

11. Dispositif selon l'une des revendications précédentes, **caractérisé en ce que** la glace de fermeture (5), ou l'écran intermédiaire optionnel (6), dont au moins une des faces est munie d'une pluralité de foyers diffusant (10) la lumière est associée à une ou plusieurs sources de lumière secondaires (7) apte à émettre de la lumière se propageant dans l'épaisseur de la glace ou de l'écran.

12. Dispositif selon la revendication 11, **caractérisé en ce que** la ou les sources de lumière secondaires (7) sont choisies parmi les diodes électroluminescentes, l'extrémité de fibres optiques, des micro-lampes à filament ou un ou plusieurs néons.

13. Dispositif selon la revendication 11 ou la revendication 12, **caractérisé en ce que** le pourtour de la glace de fermeture ou de l'écran dont la face est munie de foyers de diffusion de la lumière est partagé en au moins une zone « active » en regard d'au moins une source de lumière secondaire, et en au moins une zone « passive » sans source de lumière secondaire.

14. Dispositif selon la revendication 13, **caractérisé en ce que** la ou les zones « actives » comprennent une pluralité d'évidements (9) espacés les uns des autres et susceptibles de loger chacun au moins en partie la tête de la source de lumière secondaire de type diode électroluminescente (7).

15. Dispositif selon la revendication 13 ou la revendication 14, **caractérisé en ce que** la ou les zones « actives » comprennent un évidement continu susceptible de loger au moins en partie la tête de sources de lumières secondaires de type diodes électroluminescentes, notamment une pluralité de diodes alignées.

16. Dispositif selon l'une des revendications 13 à 15, **caractérisé en ce que** le pourtour de la glace (5) ou de l'écran (6) au niveau des zones « actives » présente une section modifiée afin d'optimiser la récupération de la lumière émise par la ou le sources de lumière secondaires, notamment une section présentant un renflement de préférence autour du ou des évidements (9) logeant au moins en partie lesdites sources de lumière secondaires.

17. Dispositif selon l'une des revendications 13 à 16, **caractérisé en ce que** le pourtour de la glace (5) ou de l'écran (6) au niveau des zones « actives » présente une section modifiée de façon à permettre la fixation directe ou indirecte de la ou des sources de lumière secondaires.

18. Dispositif selon la revendication 17 **caractérisé en ce que** ladite section comprend une excroissance servant d'embase de fixation (11) à un ou plusieurs éléments support (12) de diodes électroluminescentes (7).

19. Dispositif selon la revendication 18 **caractérisé en ce que** la fixation des éléments support (12) de diodes électroluminescentes (7) à l'embase de fixation (11) se fait par bouterollage, par vissage, par collage ou clippage.

20. Dispositif selon l'une des revendications 1 à 17 **caractérisé en ce que** les diodes (7,7') sont fixées à un support (12) solidaire de ou solidarisé au boîtier (1).

21. Dispositif selon l'une des revendications 13 à 20, **caractérisé en ce que** le chant de la glace ou de l'écran au niveau des zones « passives » est traité pour réfléchir dans l'épaisseur du matériau les faisceaux lumineux qui l'atteignent, notamment par métallisation (14) ou par un double biseautage dudit chant.

22. Dispositif selon l'une des revendications 13 à 20, **caractérisé en ce que** le chant de la glace ou de l'écran au niveau des zones « passives » est traité pour réfléchir vers l'extérieur du dispositif par la glace de fermeture les faisceaux qui l'atteignent, notamment par un simple biseautage.

23. Dispositif selon l'une des revendications 11 à 22, **caractérisé en ce que** la ou les sources de lumières secondaires (7), relayées par les foyers de diffusion (10) et éventuellement le ou les foyers de réflexion de la lumière, remplissent la fonction de feu de position, ou de rappel latéral.

24. Dispositif selon l'une des revendications précédentes, **caractérisé en ce que** les foyers de diffusion de la lumière (10), et éventuellement les foyers de réflexion de la lumière, sont obtenus directement lors du moulage de la glace de fermeture(5) ou de l'écran intermédiaire (6), ou par un post-traitement du type traitement par rayonnement laser.

25. Véhicule automobile **caractérisé en ce qu'**il est muni du dispositif selon l'une au moins des revendications précédentes.
